# EUROPEAN PATENT APPLICATION

(11) **EP 2 233 505 A1**
(43) Date of publication of application: **29.09.2010**
(21) Application number: 09155903.9
(22) Date of filing: 23.03.2009
(51) Int. Cl.: C08F 2/42, C08F 4/32, C07C 7/20

(54) **Stabilised compositions comprising olefins**

(71) Applicant: Total Petrochemicals Research Feluy, 7181 Seneffe (Feluy) (BE)
(72) Inventor: Thoret Bauchet, Jean-Pierre, 1180 Bruxelles (BE)
(74) Representative: Neel, Henry

(57) **Abstract**

The present invention is a composition stabilized against premature polymerization comprising :
a) one or more olefinic monomers,
b) one or more precursors of peroxides,
c) an efficient amount of one or more additives capable to inhibit the polymerization of the olefinic monomers of a),
d) optionally an efficient amount of one or more additives capable to inhibit the production of peroxides.

In an embodiment to make the stabilized composition, the additives c) and d) are introduced separately into the mixture of a) and b).

The precursor of peroxides can be selected among alcohols, aldehydes, cetones, ethers and organic acids.

The additive capable to inhibit the polymerization of the olefinic monomers can be a stable free radical.

The stable free radical is advantageously a stable nitroxide and/or a hydroxylamine substituted with at least one alkyl, aryl or alkylaryl group.

The additive capable to inhibit the production of peroxides can be selected among the unhindered phenols, the hindered phenols, the aminophenols and the phenylenediamines.

## Description

### [Field of the invention]

The present invention relates to stabilised compositions comprising olefins. More precisely the present invention pertains to novel compositions for inhibiting polymerization in industrial plant streams which contain reactive light olefins and oxygenates, thereby preventing fouling of processing equipment and of product in storage tanks.

Common industrial methods for producing vinyl monomers include a variety of purification processes such as distillation to remove impurities. Purification operations are often carried out at elevated temperatures and this can increase the rate of undesired polymerization. Polymerization, such as thermal polymerization, during the monomer purification process, results not only in loss of desired monomer end-product, but also in production efficiency caused by polymer formation and deposition on process equipment. Undesirable polymerization causes monomer loss, and may cause operational problems such as increase in fluid viscosity, temperature, restricted flow in pipelines, and block filters. In heat requiring operations, such deposition adversely affects heat transfer efficiency.
The process of recovering olefinic hydrocarbons from a methanol to olefins process or an alcohol dehydration is complicated by the formation of fouling deposits on the heat transfer surfaces of the processing equipment. More specifically the processing may include, for example, preheating, hydrogenation, fractionation, extraction and the like of hydrocarbon streams to remove, concentrate, or have added thereto the unsaturated hydrocarbons prior to storage or use. These deposits decrease the thermal efficiency of the equipment and decrease the separation efficiency of the distillation towers. In addition, operating modifications to reduce the rate of fouling can result in reduced production capacity. The excessive build-up of such deposits can cause plugging in tower plates, transfer tubes, and process lines, which could result in unplanned shutdowns.

### [Background of the invention]

US 4670131 relates to the fouling of equipment used for processing of organic feed streams containing olefinic compounds. Said fouling is controlled by inhibiting polymerization of the olefinic compounds by carrying out the processing in the presence of from about 20 ppb to less than 1000 ppb of a stable free radical, such as a nitroxide. The olefinic hydrocarbons are coming from gas and liquid cracking operations. The fouling deposits are e.g. on the heat transfer surfaces of the processing equipment. These deposits are generally thought to result from free radical polymerization induced thermally, by contaminating oxygen or by metal ions.
WO 98 02400 describes a monomer composition, stabilised against premature polymerisation, comprising:
a) an ethylenically unsaturated monomer or mixture of monomers polymerisable by free radical initiation, and
b) an effective amount, sufficient to inhibit premature polymerisation of component (a) of a mixture of:
   i) 1 to 99 % by weight, based on the total weight of components (i) and
   (ii) of a mixture of at least one aromatic amine and at least one organic acid in a molar ratio of 10:1 1 to 1:10, and
   ii) 99 to 1 % by weight based on the total weight of components (i) and
   (ii) of at least one stable radical compound.

WO 00 31005 pertains to novel methods and compositions for inhibiting polymerization in industrial plant streams which contain reactive light olefins, thereby preventing fouling of processing equipment and of product in storage tanks. Particularly, the invention pertains to the use of a combination of phenylenediamines and nitroxides to prevent undesired polymerization in reactive light olefins.

US 6639026 describes methods and compositions for inhibiting the polymerization of vinyl monomers. Combinations of aminophenol compounds and nitroxyl radical compounds are effective at inhibiting vinyl monomer polymerization under both processing and storage conditions.

WO 2001 047844 describes a composition comprising a nitroxide or dinitroxide and an aromatic amine as an additive for preventing polymeric fouling in petrochemical apparatuses for producing, storing, refining, fractionating, pressurizing and extracting olefinic compounds from a hydrocarbon stream.

WO2002088055 relates to methods and compositions for inhibiting polymerization of diene monomers, and more particularly relates, in one embodiment, to methods and compositions for inhibiting the polymerization of butadiene which gives rise to popcorn polymer growth. The composition for inhibiting polymerization of diene compounds has at least two components, one component is a hindered or unhindered phenol and the second component is selected from the group of low nitrogen content components which may be a stable nitroxide and/or a hydroxylamine substituted with at least one alkyl, aryl or alkylaryl group, and/or a second hindered or unhindered phenol.

In the above prior arts polymerization of styrene or the reactive olefins such as butadiene, isoprene is reduced by the presence of specific additives. Said polymerization makes fouling deposits (also known as gums) on the heat transfer surfaces of the processing equipment. These deposits are generally thought to result from free radical polymerization induced thermally, by contaminating oxygen or by metal ions. The above prior arts don't mention the presence of oxygenates in the olefins. This is in agreement with the conventionnal naphta steam cracking to make olefins in which the step of olefins recovery, further to the furnace, comprises a caustic wash column which eliminates most of the oxygenates. There is also no significant presence of oxygenates in olefins made by cracking of ethane. In the alkylation of benzene by ethylene followed by a dehydrogenation to make styrene there is no significant presence of oxygenates.
Olefins can now be made by conversion of methanol or dimethyl ether on a molecular sieve, or by dehydration of an alcohol or even by cracking of fatty acids or natural triglycerides. In these processes there are olefins streams comprising up to e.g. thousands of ppmw oxygenates such as aldehydes or cetones. It has been discovered that these oxygenates (precursors of peroxides) are converted to peroxides by contaminating oxygen and said peroxides lead to the making of gums by polymerization of the active olefins. This polymerization is in addition of the free radical polymerization induced thermally, by contaminating oxygen or by metal ions.
It has been discovered that the presence of a nitroxide, known to prevent polymerizations, in an olefins stream comprising reactive olefins and oxygenates has only a minor effect on reducing the gums. To significantly reduce the gums the proportion of the nitroxide should be highly increased.
It has also been discovered that the introduction of an antioxydant (additive capable to inhibit the production of peroxides), in addition of an additive capable to inhibit a polymerization such as a nitroxide, is more efficient than high proportions of the additive capable to inhibit a polymerization. The antioxydant enhances the stabilization even with low concentrations of nitroxide. It means there is a synergy.

### [Brief summary of the invention]

The present invention is a composition stabilized against premature polymerization comprising :
a) one or more olefinic monomers,
b) one or more precursors of peroxides,
c) an efficient amount of one or more additives capable to inhibit the polymerization of the olefinic monomers of a),
d) optionally an efficient amount of one or more additives capable to inhibit the production of peroxides.

The additives c) and d) may be added to the composition by any conventional method, either as individual components or as a combination of components.
In an embodiment to make the stabilized composition, the additives c) and d) are introduced separately into the mixture of a) and b).

The use of these novel compositions prevents fouling of equipment and product during handling, processing, purification, and storage.

### [Detailed description of the invention]

**As regards the olefinic monomer**, it includes hydrocarbon monomers generally having 2 to 20 carbon atoms such as ethylene, propylene, butene-1, isobutene, pentene, hexene, octene, dodecene, butadiene, isoprene, hexadiene and the like; vinyl monomers such as vinyl chloride, vinyl acetate, vinylidene chloride, ethyl vinyl ketone, chloroprene, styrene, divinylbenzene, vinyl pyridiene, chlorostyrenes, esters of acrylic acid and methacrylic acid, acrylamide, acrylonitrile, methacrylonitrile, acrolein, methacrolein and the like. It also includes acetylenic compounds, for example vinyl acetylene, methyl acetylene and the like. The olefinic monomer may also include higher molecular weight compounds found in crude oil and crude oil distillates.

**As regards the precursor of peroxides**, it means any component capable to be converted to peroxide by contaminating oxygen or equivalent means. One can cite alcohols, aldehydes, cetones, ethers. By way of example one can cite, dimethylether, acetaldehyde, propanal, acetone, methylethylcetone (MEK) and organic acids.

**As regards the additives capable to inhibit the polymerization of the olefinic monomers,** one can cite the stable free radicals. Any stable free radical (or precursor thereof under conditions which produce the stable free radical in situ) as defined may be used in the present invention. The stable free radicals suitable for use in this invention may be selected from, but are not limited to, the following groups of chemicals: nitroxides (e.g., di-tert butylnitroxide), hindered phenoxys (e.g., galvinoxyl), hydrazyls (e.g., diphenylpicrylhydrazyl), and stabilized hydrocarbon radicals (e.g., triphenylmethyl), as well as polyradicals, preferably biradicals of these types. In addition, certain precursors that produce stable free radicals in situ may be selected from the following groups: nitrones, nitrosos, thioketones, benzoquinones, and hydroxylamines.
These stable free radicals exist over a wide range of temperatures up to about 260°C. A limiting factor in their use is the temperature of the processing wherein they are employed. Specifically the present method applies to processing carried on at temperatures at which said stable free radical exists. Pressure has not been seen to be significant to the present method, hence, atmospheric, sub or superatmospheric conditions may be employed.
In an advantageous embodiment the stable free radical may be a stable nitroxide and/or a hydroxylamine substituted with at least one alkyl, aryl or alkylaryl group.
Specific examples of such suitable hydroxylamines substituted with at least one alkyl, aryl or alkylaryl group include, but are not necessarily limited to N-ethylhydroxylamine (EHA); N,N'-diethylhydroxylamine (DEHA); N-ethyl N-methylhydroxylamine (EMHA); N-isopropylhydroxylamine (IPHA); N,N' dibutylhydroxylamine (DBHA); N-amylhydroxylamine (AHA); N-phenylhydroxylamine (PHA); and the like and mixtures thereof.

A preferred stable nitroxide free radical for use in this invention is a nitroxide having the formula: 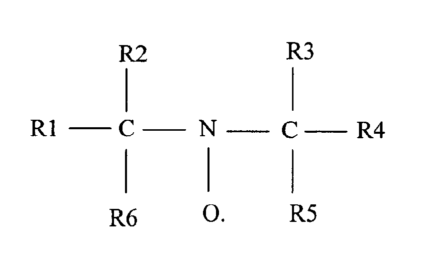 wherein R1, R2, R3 and R4 are alkyl groups or heteroatom substituted alkyl groups and no hydrogen is bound to the remaining valences on the carbon atoms bound to the nitrogen. The alkyl (or heteroatom substituted) groups R1-R4 may be the same or different, and preferably contain 1 to 15 carbon atoms. Preferably R1-R4 are methyl, ethyl, or propyl groups. In addition to hydrogen the heteroatom substituents may include, halogen, oxygen, sulfur, nitrogen and the like.
The remaining valences R5-R6 in the formula above may be satisfied by any atom or group except hydrogen which can bond covalently to carbon, although some groups may reduce the stabilizing power of the nitroxide structure and are undesirable. Preferably R5 and R6 are halogen, cyano,-COOR wherein R is alkyl or aryl, --CONH2, --S--C6H5, --S--COCH3,-OCOC2H5, carbonyl, alkenyl where the double bond is not conjugated with the nitroxide moiety or alkyl of 1 to 15 carbon atoms, R5 and R6 may also form a ring of 4 or 5 carbon atoms and up to two heteroatoms, such as O, N or S by R5 and R6 together. Examples of suitable compounds having the structure above and in which R5 and R6 form part of the ring are pyrrolidin-1-oxys, piperidinyl-1-oxys, the morpholines and piperazines. Particular examples wherein the R5 and R6 above form part of a ring are 4-hydroxy-2,2,6,6-tetramethyl-piperindino-1-oxy, 2,2,6,6-tetramethyl-piperidino-1-oxy, 4-oxo-2,2,6,6-tetramethyl-piperidino-1-oxy and pyrrolin-1-oxyl. Suitable R5 and R6 groups are methyl, ethyl, and propyl groups. A specific example of a suitable compound where R1-R6 are alkyl groups is di-tert-butylnitroxide. The preferred carbonyl containing nitroxides are those wherein the R5 and R6 form a ring structure with the nitrogen, preferably a six number ring, for example, 4-oxo-2,2,6,6-tetramethylpiperidino-1-oxy. Preferred nitroxides are the 4-hydroxy-2,2,6,6-tetramethylpiperidine-1-oxyl (also referred as 4 OH Tempo), as in formula hereunder, 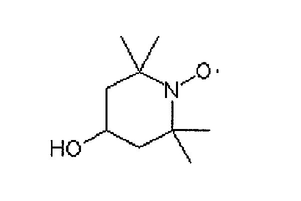 the 4-amino-2,2,6,6-tetramethylpiperidine-1-oxyl (also referred as 4 NH Tempo) as in formula hereunder 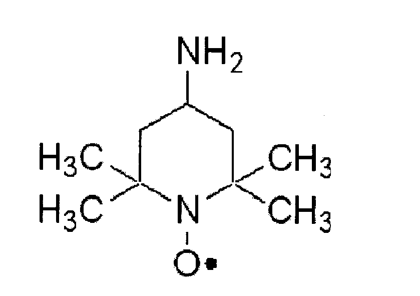 and 4 butoxy Tempo.

**As regards the additives capable to inhibit the production of peroxides**, one can cite the unhindered phenols, the hindered phenols, the aminophenols and the phenylenediamines.

The aminophenol may be selected from the compounds given by the following formula:

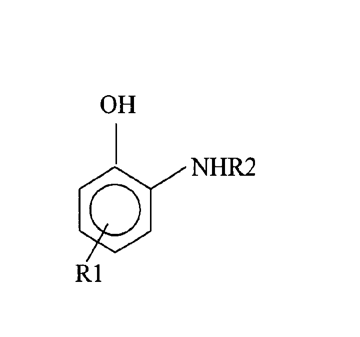

Where R1 is selected from hydrogen, a C1-C20 alkyl group, aryl group, or OR', with R' being a H, an alkyl or an aryl group. R2 is selected from an alkyl, a phenyl group, or OR', with R' having the same meaning as before.
Non-exclusive examples of such compounds are 2-aminophenol (2 AP), 3-hydroxy-2-aminophenol, 2-amino-naphthalen-1-ol, 3-amino-naphthalen-2-ol, 1-amino-naphthalen-2-ol, 2-amino-tert-butyl-phenol, and 2-amino-4-methylphenol.

Suitable hindered or unhindered phenols may include, but are not necessarily limited to, 4-tert butylcatechol (TBC); tert-butyl hydroquinone (TBHQ); 2,6-di-tert-butyl-4-methoxyphenol (DTBMP); 2,4 di-tert-butylphenol; 2,5-di-tert-butylphenol; 2,6-di tertbutylphenol; 2,4, tri-tert-butylphenol; butylated hydroxyltoluene (BHT, also known as 2,6 di-tert-butyl-paracresol and 2,6 di-tert-butyl methylphenol); 2,6 di-tert-butyl-4-nonylphenol; 2,6-di-tert-butyl-4-sec-butylphenol; 2-butyl-4-methylphenol; 2-tert-butyl-4-methoxyphenol (also known as butylated hydroxyanisole or BHA); 2, di-tert-butyl hydroquinone 15 (DTBHQ); tert-amyl hydroquinone; 2,5-di-amyl hydroquinone; 3, di-tert-butylcatechol; hydroquinone; hydroquinone monomethyl ether; hydroquinone monoethyl ether; hydroquinone monobenzyl ether; or 3,3,3',3'-tetramethyl, 1,1-spirobis-indane-5,5',6,6' tetrol (Tetrol); topanol® AN (mixture of BHT and 2,4 Dimethyl-6-tert-butylphenol) and mixtures thereof.

The phenylenediamines of this invention have at least one N-H group and are advantageously of the following formula : 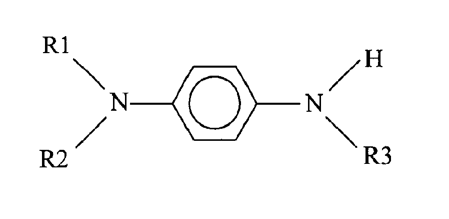 wherein R1, R2, and R3 are the same or different and are hydrogen, straight or branched chain alkyl of 1 to 20 carbon atoms, straight or branched chain alkyl of 1 to 20 carbon atoms which is substituted by one to three aryl groups, aryl of 6 to 12 carbon atoms, or aryl of 6 to 12 carbon atoms which is substituted by one to three alkyl groups of 1 to 6 carbon atoms.
Suitable examples of phenylenediamines include N-phenyl-N'-methyl-1,4-phenylediamine, N-phenyl-N'-ethyl-1,4-phenylediamine, N-phenyl-N'-n-propyl-1,4-phenylediamine, N-phenyl-N'-isopropyl-1,4-phenylediamine (NIPP PPDA), N-phenyl-N'-n-butyl-1,4-phenylediamine, N-phenyl-N'-iso-butyl-1,4-phenylediamine, N-phenyl-N'-sec-butyl-1,4-phenylediamine, N-phenyl-N'-t-butyl-1,4-phenylediamine, N-phenyl-N'-n-pentyl-1,4-phenylediamine, N-phenyl-N'-n-hexyl-1,4-phenylediamine, N-phenyl-N'-(I-methylhexyl)-1,4-phenylediamine, N-phenyl-N'-(1,3-dimethylbutyl)-1,4-phenylediamine, N-phenyl-N'-(1,4-dimethylpentyl)-1,4-phenylediamine, N-phenyl-N', N'-dimethyl-1,4-phenylenediam ine, N-phenyl-N',N'-diethyl-1,4-phenylenediamine, N-phenyl-N', N'-di-n-butyl-1,4-phenylenediamine, N-phenyl-N,N'-di-sec-butyl-1,4-phenylenediamine, N-phenyl-N'-methyl-N'-ethyl-1,4-phenylenediamine, N,N'-dimethyl-1,4-phenylenediamine, N, N'-di ethyl-1,4-phenylenediamine, N,N'-diisopropyl-1,4-phenylenediamine, N,N'-di-iso-butyl-1,4-phenylenediamine, N,N'-di-sec-butyl-1,4-phenylenediamine (DSB PPDA), N,N'-bis(1,4-dimethylpentyl)-1,4-phenylenediamine, N,N'-bis(1,3-dimethylbutyl)-1,4-phenylenediamine, N,N'-diphenyl-1,4-phenylenediamine, N,N,N'-trimethyl-1,4-phenylenediamine, and N,N,N'-triethyl-1,4-phenylenediamine and N-phenyl-p-phenylenediamine (NP PPDA).

**As regards the stabilized composition,** it is of use in industrial processes in which a light olefin is handled or manipulated other than the intentional polymerization of the olefin. Such processes include but are not limited to hydrocarbon cracking processes, preheating, distillation, hydrogenation, extraction, etc. The additives can be introduced as pure or as a dilute solution in an hydrocarbon or equivalent.
The additives of this invention may also be used with other additives known to prevent fouling such as antioxidants, metal deactivators, corrosion inhibitors and the like. The stabilizer combination of this invention may be applied at any point in an industrial plant stream or process where it is effective.

In an embodiment the composition comprises essentially a), b)+c)+d) are less than 1 w% of a)+ b)+c)+d). By way of example it is an ethylene stream, a propylene stream, a butadiene stream, a styrene stream or an isoprene stream under purification. a) may comprise 80 to 100% of the olefin to be recovered or purified.

In another embodiment, a) is an hydrocarbon mixture comprising an olefin and the polymerization of said olefin is unwanted.
The proportion of b) with reference to a) is typically around about 20 to about 10000 wppm and most frequently from about 100 to about 2000.
The proportion of c) with reference to a) can be up to about 50, advantageously up to about 10 wppm and preferably from about 0.01 to about 5 wppm.

The proportion of d) with reference to a) can be up to about 50, advantageously up to about 10 wppm and preferably from about 0.01 to about 5 wppm.

### [Examples]

They have been made on mixtures heptane-isoprene (5/1 by weight) comprising 0 or 1000 wppm acetaldehyde. These mixtures initially contain no gums, aging is as follows :

| | |
|---|---|
| Mixture heptane-isoprene with and without acetaldehyde and optionally the additives. | 5:1 |
| aging | 7 days under air at 4°C |
| Number of compression-decompression cycles | 4 cycles N2 purge to remove 02 |
| maturation | 4 hours at 100°C |
| boiling off under N2 | 2 hours at 162°C |
| boiling off under steam | 1 hour at 240°C |
| Number of analysis for each sample | 2 without acetaldehyde 2 with acetaldehyde (1000 ppm) |

The following fig 1 compares the effects of acetaldehyde, propanal and acetone.

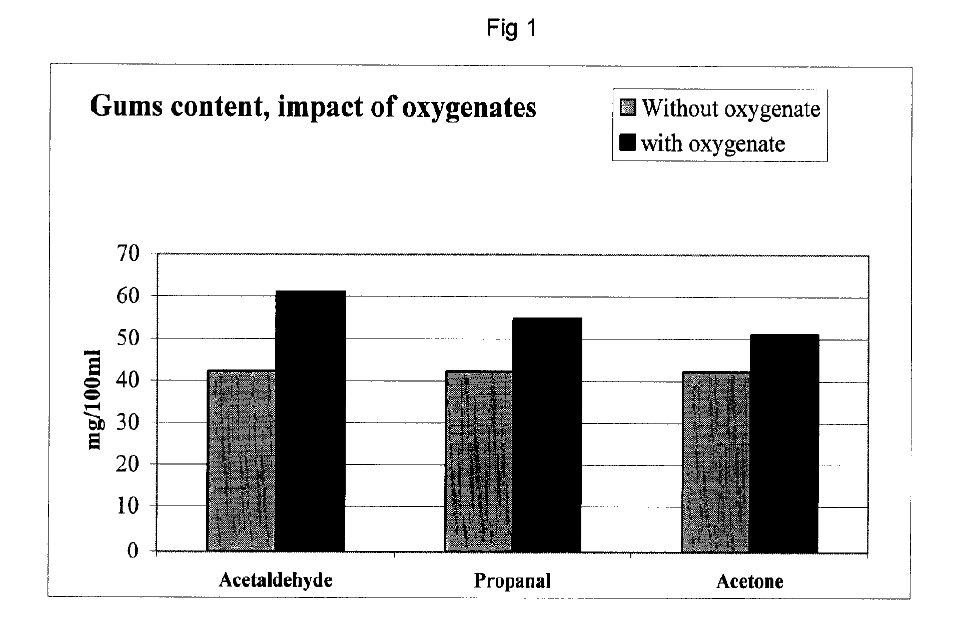

The following fig 2 compares the additives capable to inhibit the polymerization of the olefinic monomers and the additives capable to inhibit the production of peroxides.

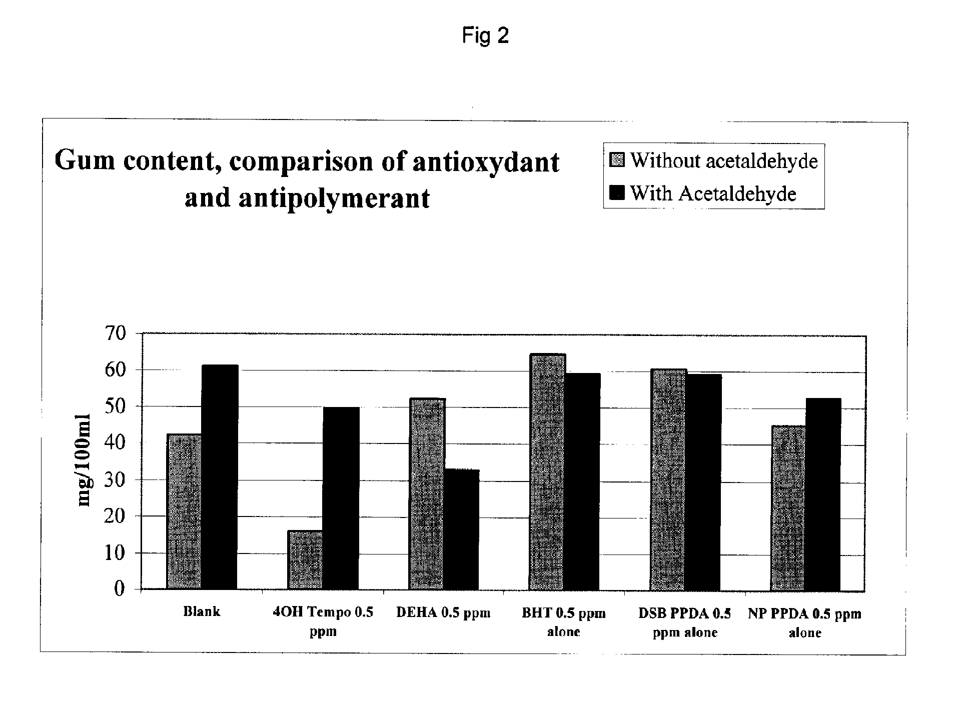

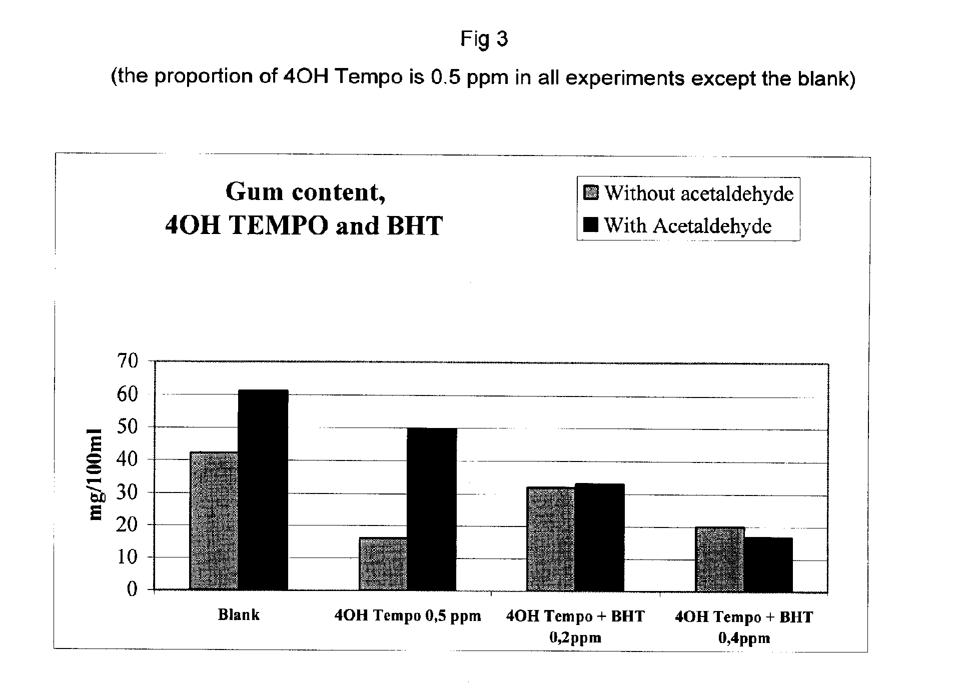

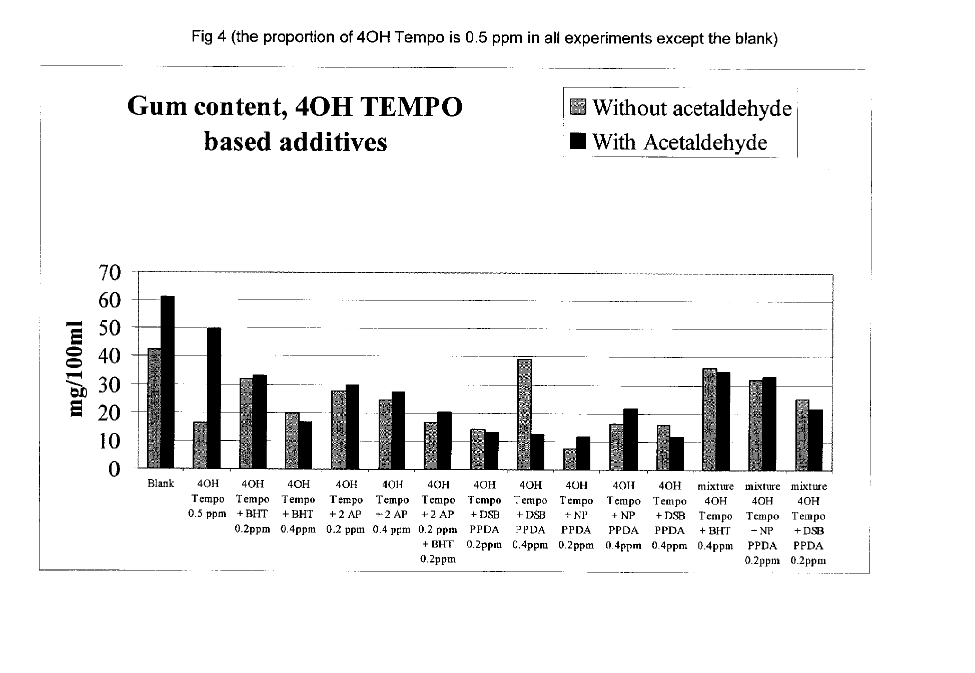

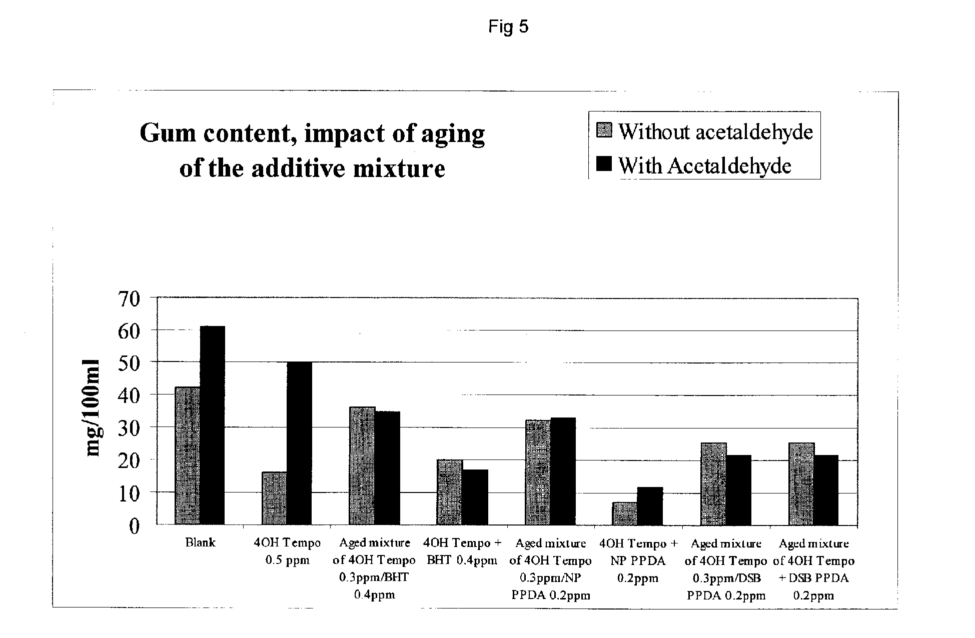

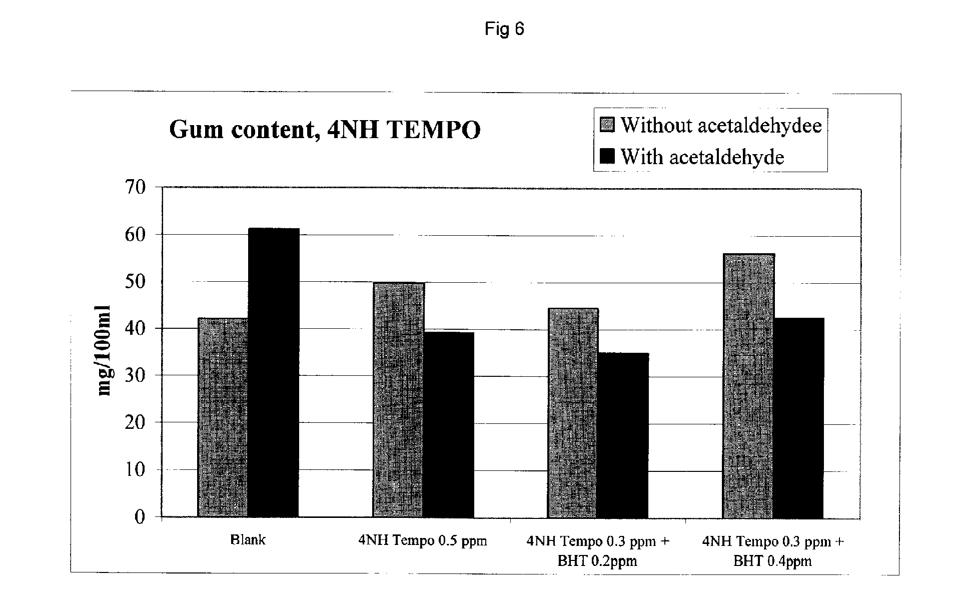

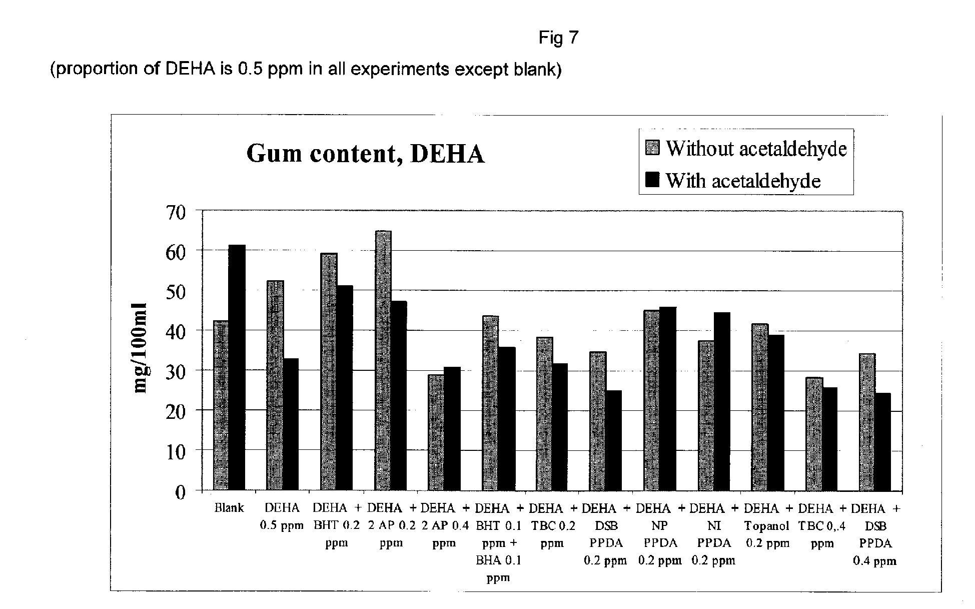

## Claims

1. Composition stabilized against premature polymerization comprising :
a) one or more olefinic monomers,
b) one or more precursors of peroxides,
c) an efficient amount of one or more additives capable to inhibit the polymerization of the olefinic monomers of a),
d) optionally an efficient amount of one or more additives capable to inhibit the production of peroxides.

2. Composition according to claim 1 wherein one or more additives capable to inhibit the polymerization of the olefinic monomers and one or more additives capable to inhibit the production of peroxides are present.

3. Composition according to any one of the preceding claims wherein the precursor of peroxides is selected among alcohols, aldehydes, cetones, ethers and organic acids.

4. Composition according to any one of the preceding claims wherein the additive capable to inhibit the polymerization of the olefinic monomers is a stable free radical.

5. Composition according to claim 4 wherein the stable free radical is a stable nitroxide and/or a hydroxylamine substituted with at least one alkyl, aryl or alkylaryl group.

6. Composition according to any one of the preceding claims wherein the additive capable to inhibit the production of peroxides is selected among the unhindered phenols, the hindered phenols, the aminophenols and the phenylenediamines.

7. Composition according to any one of the preceding claims wherein the proportion of b) with reference to a) is around about 20 to about 10000 wppm and advantageously from about 100 to about 2000.

8. Composition according to any one of the preceding claims wherein the proportion of c) with reference to a) is up to about 50 wppm.

9. Composition according to claim 8 wherein the proportion of c) with reference to a) is up to about 10 wppm.

10. Composition according to claim 9 wherein the proportion of c) with reference to a) is from about 0.01 to about 5 wppm.

11. Composition according to any one of the preceding claims wherein the proportion of d) with reference to a) is up to 50 wppm.

12. Composition according to claim 11 wherein the proportion of d) with reference to a) is up to about 10 wppm.

13. Composition according to claim 12 wherein the proportion of d) with reference to a) is from about 0.01 to about 5 wppm.

14. Composition according to any one of the preceding claims wherein the additives c) and d) are introduced separately into the mixture of a) and b).
